(19) Europäisches Patentamt
European Patent Office
Office européen des brevets

(11) **EP 2 199 553 B1**

(12) **EUROPEAN PATENT SPECIFICATION**

(45) Date of publication and mention
of the grant of the patent:
**01.08.2012 Bulletin 2012/31**

(51) Int Cl.:
***F01N 3/021*** *(2006.01)* ***F01N 11/00*** *(2006.01)*

(21) Application number: **09176901.8**

(22) Date of filing: **24.11.2009**

(54) **Failure detection apparatus for exhaust gas purifying filter**

**Fehlererkennungsvorrichtung für Abgasreinigungsfilter**

**Appareil de détection de défaillance pour filtre de purification de gaz d'échappement**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.12.2008 JP 2008325978**

(43) Date of publication of application:
**23.06.2010 Bulletin 2010/25**

(73) Proprietor: **Honda Motor Co., Ltd.**
**Tokyo 107-8556 (JP)**

(72) Inventors:
• **Okayama, Tatsuya**
**Saitama 351-0193 (JP)**
• **Miki, Masanobu**
**Saitama 351-0193 (JP)**

• **Iwama, Keizo**
**Saitama 351-0193 (JP)**
• **Ozawa, Hidetaka**
**Saitama 351-0193 (JP)**
• **Hattori, Makoto**
**Saitama 351-0193 (JP)**

(74) Representative: **Prechtel, Jörg**
**Weickmann & Weickmann**
**Patentanwälte**
**Postfach 86 08 20**
**81635 München (DE)**

(56) References cited:
**EP-A1- 1 106 797      EP-A1- 2 120 044**
**WO-A1-2009/115542    DE-A1-102006 029 990**
**DE-A1-102006 057 528    DE-C1- 4 139 325**

**Description**

BACKGROUND OF THE INVENTION

Field of the Invention

The present invention relates to failure detection apparatus for an exhaust gas purifying filter. In particular, the present invention relates to failure detection apparatus for an exhaust gas purifying filter that uses an electrostatic dust collection type of particulate matter sensor.

Related Art

Technology that provides an exhaust gas purifying filter that collects particulate matter contained in exhaust gas, in an exhaust gas path of an internal combustion engine, has been widely used to decrease the emission amount of particulate matter. In addition, in a vehicle provided with an exhaust gas purifying filter, an apparatus for detecting the failure of the exhaust gas purifying filter is also provided. As this failure detection apparatus for an exhaust gas purifying filter, the below-mentioned apparatus has been suggested thus far.

For example, Japanese Unexamined Patent Application Publication Nos. 2008-115765 and 2007-315275 disclose failure detection apparatuses provided with a particulate matter sensor detecting particulate matter in exhaust gas, which is provided at the downstream side of the exhaust gas purifying filter, to detect the failure of the exhaust gas purifying filter based on outputs from this sensor. It should be noted that Japanese Unexamined Patent Application Publication No. 2008-115765 discloses that an electrical discharge sensor generating a discharge voltage corresponding to the concentration of particulate matter in exhaust gas is used as a particulate matter sensor.

In addition, Japanese Unexamined Patent Application Publication No. 2007-132290 discloses a failure detection apparatus provided with particulate matter sensors upstream and downstream of the exhaust gas purifying filter, respectively. This failure detection apparatus calculates the ratio of the amount of particulate matter flowing in the exhaust gas purifying filter to the amount of particulate matter flowing out from the exhaust gas purifying filter based on the output from each of the sensors, and then compares the calculated ratio with that when the filter is in a normal state, thereby detecting the failure of the exhaust gas purifying filter.

Incidentally, the particulate matter sensor used for the above-mentioned failure detection apparatus is demanded not only to be capable of high accuracy detection, but also to have excellent durability for mounting in an exhaust gas path. In addition, it is demanded to have a simple configuration to be equipped in a vehicle. For example, an electrostatic dust collection type of particulate matter sensor has been proposed as a particulate matter sensor that satisfies such demands (refer to Japanese Unexamined Patent Application Publication No. 2008-139294).

In the electrostatic dust collection type of particulate matter sensor, an electrode unit composed of a pair of electrode plates is provided in an exhaust pipe, and particulate matter is thus deposited on this electrode unit by applying a predetermined voltage to the electrode unit. Then, the concentration of particulate matter in the exhaust gas in the exhaust pipe can be detected by measuring an electrical characteristic such as the capacitance of the electrode unit on which particulate matter is deposited.

DE 10 2006 029990 A1 discloses a failure detection apparatus for an exhaust gas purifying filter (PF) that is provided in an exhaust gas path of an internal combustion engine, and that collects particulate matter contained in exhaust-gas emitted from the internal combustion engine (10), the apparatus comprising:

- an operating state detection means (n, 15) for detecting an operating state of the internal combustion engine; .
- an electrode unit (12) that is provided downstream of the exhaust gas purifying filter in the exhaust gas path;
- a particulate sensor (12) for performing a sampling process of causing particulate matter to deposit on the electrode unit by applying a predetermined voltage to the electrode unit, and then performing a measurement process of measuring a predetermined electrical characteristic of the electrode unit; and
- a failure detection means (15) for detecting failure of the exhaust gas purifying filter based on an operating state parameter indicating the operating state of the internal combustion engine while performing the sampling process and a measured value measured by performing the measurement process.

There, for determining the filter efficiency, the signal from the particle sensor 12 is compared with an upstream particulate signal which is calculated based on engine speed and a fuel signal. If the difference therebetween exceeds a predetermined threshold value eta_PF_Lim, a failure signal is provided.

DE 10 2006 057528 A1 shows a similar device, wherein a failure signal threshold value TH-UP for indicating particle filter failure is predetermined, and the time period over which the signal of the particulate sensor exceeds the threshold value TH-UP is determined.

## SUMMARY OF THE INVENTION

However, since the detection of the concentration of particulate matter by the above-mentioned electrostatic dust collection type of particulate matter sensor is performed in two steps: a step of performing a sampling process of depositing particulate matter on the electrode unit, and a step of performing a measurement process of measuring the electrical characteristic of the electrode unit after this sampling process, it lacks readiness.

Therefore, when such an electrostatic dust collection type of particulate matter sensor is used in a failure detection apparatus for an exhaust gas purifying filter, the failure detection accuracy may be lowered. Specifically, since the operating state of the internal combustion engine changes in accordance with the driver's operation and the like, using an electrostatic dust collection type of particulate matter sensor makes a difference between the operating state in the performance of the sampling process and the operating state in the performance of the measurement process, failure may not be correctly detected.

The present invention was made by taking the above such issues into account, and an object thereof is to provide a failure detection apparatus for an exhaust gas purifying filter that uses an electrostatic dust collection type of particulate matter sensor while being capable of detecting failure with high-accuracy.

In order to achieve the above-mentioned object, the present invention provides a failure detection apparatus for an exhaust gas purifying filter (3) that is provided in an exhaust gas path (4) of an internal combustion engine (1), and that collects particulate matter contained in exhaust gas emitted from the internal combustion engine in accordance with claim 1. The failure detection apparatus includes: an operating state detection means (5, 7, 8) for detecting an operating state of the internal combustion engine; an electrode unit (24) provided downstream of the exhaust gas purifying filter in the exhaust gas path; a particulate matter detection means (5,21) for performing a sampling process of causing particulate matter to deposit on the electrode unit by applying a predetermined voltage to the electrode unit, and then performing a measurement process of measuring a predetermined electrical characteristic of the electrode unit; and a failure detection means (5) for detecting failure of the exhaust gas purifying filter based on an operating state parameter (N, W, $N_{MEAS\_AVE}$, $W_{MEAS\_AVE}$) indicating the operating state of the internal combustion engine while performing the sampling process and a measured value ($\Delta C$) measured by performing the measurement process.

According to the present invention, the sampling process of causing particulate matter to deposit on the electrode unit by applying a predetermined voltage to the electrode unit is performed, and then the measurement process of measuring a predetermined electrical characteristic of this electrode unit is performed. In addition, failure of the exhaust gas purifying filter is detected based on a measured value measured by this measurement process and the operating state parameter. In particular, by using an operating state parameter indicating the operating status of the internal combustion engine while performing the sampling process, it is possible to detect failure of the exhaust gas purifying filter with high accuracy even if the operating state while performing the sampling process differs from that while performing the measurement process.

The failure detection means sets a first threshold value ($C_{TH}$) in accordance with the operating state parameter, and then compares the first threshold value with the measured value (N,W,$N_{MEAS\_AVE}$, $W_{MEAS\_AVE}$) measured by performing the measurement process to detect failure of the exhaust gas purifying filter.

According to the present invention, the first threshold value is set in accordance with the operating state parameter while performing the sampling process, and then failure of the exhaust gas purifying filter is detected by comparing this first threshold value with the measured value. For example, by using the control map and the like that are set based on preliminarily performed experimentation when the first threshold value is set from the operating state parameter, the failure detection accuracy of the exhaust gas purifying filter can be further improved.

In this case, it is preferable that the electrical characteristic is a variation amount in capacitance ($\Delta C$) from before and after performing the sampling process.

According to the present invention, the variation amount in capacitance from before and after performing the sampling process is measured as a predetermined electrical characteristic of the electrode unit in the measurement process. The capacitance of the electrode unit significantly changes when particulate matter is deposited on the electrode unit. According to the present invention, by measuring such a variation amount of capacitance of the electrode unit, the concentration of particulate matter contained in exhaust gas downstream of the exhaust gas purifying filter can be detected accurately. Therefore, the failure detection accuracy of the exhaust gas purifying filter can be further improved.

In this case, it is preferable that the operating state parameter is a mean value ($N_{MEAS\_AVE}$, $W_{MEAS\_AVE}$) of a detection value detected by the operating state detection means while performing the sampling process.

According to the present invention, a mean value of the detection value, which is detected by the operating state detection means while performing the sampling process, is used as the operating state parameter. Thus, while performing the sampling process, or while causing particulate matter to deposit on the electrode unit, the operating state of the internal combustion engine can be more accurately reflected in the operating state parameter. Therefore, by detecting the failure of the exhaust gas purifying filter with such an operating state parameter, the failure detection accuracy of the exhaust gas purifying filter can be further improved.

In this case, it is preferable that the failure detection apparatus further includes a perform sampling determination means (5) for determining whether or not the detection value detected by the operating state detection means before performing the sampling process is within a predetermined first determination range ($[N_{MIN}, N_{MAX}]$, $[M_{MIN}, W_{MAX}]$) over a predetermined first determination time ($T_{PRE}$), in which the sampling process is performed only in a case where the detection value is determined to be within the first determination range over the first determination time.

According to the present invention, the sampling process is performed only in a case where the detection value detected by the operating state detection means before performing the sampling process is within the first determination range over the first determination time, or only in a case where the operating state of the internal combustion engine is stable. For example, in a case where the operating state of the internal combustion engine substantially changes while performing the sampling process, or while causing particulate matter to deposit on the electrode unit, the concentration of particulate matter in exhaust gas cannot be accurately reflected in the measured value measured in the measurement process. According to the present invention, by performing the sampling process only in a case where the operating state is stable as described above, the failure detection accuracy of the exhaust gas purifying filter can be further improved.

In this case, it is preferable that the failure detection apparatus further includes a perform measurement determination means (5) for determining whether or not the detection value detected by the operating state detection means while performing the sampling process is within a predetermined second determination range ($[N_{MIN}, N_{MAX}]$, $[W_{MIN}, W_{MAX}]$) over a predetermined second determination time ($T_{MEAS}$), in which the sampling process is performed only in a case where the detection value is determined to be within the second determination range over the second determination time.

According to the present invention, the measurement process is performed only in a case where the detection value detected by the operating state detection means while performing the sampling process is within the second determination range over the second determination time, or only in a case where the sampling process has been performed in a state in which the operating state of the internal combustion engine was stable. Therefore, the failure detection accuracy of the exhaust gas purifying filter can be further improved.

The failure detection apparatus further includes: a test particulate matter detection means (5,21) for performing a test sampling process of causing particulate matter to deposit on the electrode unit by applying a predetermined voltage to the electrode unit, and then performing a test measurement process of measuring a predetermined electrical characteristic of the electrode unit; a determination means (5) for determining whether or not to perform the sampling process and the measurement process, by comparing a predetermined second threshold value ($C_{THT}$) with the measured value ($\Delta C_T$) measured by performing the test measurement process; and a prevention means (5) for preventing the sampling process and the measurement process from being performed in a case where the determination means determines that the sampling process and the measurement process are not to be performed.

According to the present invention, the test sampling process and the test measurement process are performed, and then it is determined whether or not to perform the above-mentioned sampling process and the above-mentioned measurement process by comparing the second threshold value with the measured value measured by performing this test measurement process. In a case where it is determined that the sampling process and the measurement process are not to be performed, the sampling process and the measurement process are prevented from being performed.

Incidentally, in the failure detection apparatus of the present invention, the sampling process and the measurement process are performed only in a case where the operating state of the internal combustion engine is stable. Therefore, in a case where the operating state substantially changes while performing the sampling process, for example, it is necessary to temporarily interrupt the sampling process so as not to be performed consecutively, remove particulate matter deposited on the electrode unit, this electrode unit is regenerated, and then repeat performing the sampling process once more after regenerating this sensor electrode unit. Such regeneration of the electrode unit is conducted, for example, by heating the electrode unit with heaters over a predetermined time to combust particulate matter. That is, in a case where the operating state of the internal combustion engine is unstable, the electrode unit is regenerated more frequently, which causes the detection for failure of the exhaust gas purifying filter to be performed less frequently.

Thus, according to the present invention, by taking advantage of the fact that, when the exhaust gas purifying filter is normal, the amount of particulate matter deposited on the electrode unit extremely decreases regardless of the operating state of the internal combustion engine, the test sampling process and the test measurement process are performed provisionally, and then it is determined whether or not to perform the sampling process and the measurement process for detecting failure based on these results. Thus, in a state in which the exhaust gas purifying filter is in a normal state, the sampling process and the measurement process can be performed less frequently, and the electrode unit can be regenerated less frequently. As a result, it is possible to improve the frequency at which detection for failure of the exhaust gas purifying filter is performed.

In this case, it is preferable that the determination means compares the second threshold value ($C_{THT}$) with the measured value ($\Delta C_T$) measured by performing the test measurement process, and determines that the sampling process and the measurement process are not to be performed in a case where the measured value is smaller than the second threshold value.

According to the present invention, the measured value measured by performing the test measurement process is compared with the second threshold value, and in a case where the measured value is smaller than the second threshold value, the sampling process and the measurement process are prevented from being performed. Thus, setting the second threshold value to an extremely small value can prevent the sampling process and the measurement process for detecting the failure of the exhaust gas purifying filter from being performed, even though the exhaust gas purifying filter is normal. As a result, it is possible to improve the frequency at which detection for failure of the exhaust gas purifying filter is performed.

BRIEF DESCRIPTION OF THE DRAWINGS

FIG. 1 is a diagram illustrating the structure of an internal combustion engine and a control unit thereof including a failure detection apparatus for a diesel particulate filter according to a first embodiment of the present invention;
FIGs. 2A and 2B are perspective views illustrating the structure of the sensor electrode unit according to the above-mentioned embodiment;
FIG. 3 is a flow chart illustrating the procedure of the failure detection process for a diesel particulate filter according to the above-mentioned embodiment;
FIG. 4 is a diagram illustrating the relationship between the variation amount of capacitance $\Delta C$ and the PM concentration according to the above-mentioned embodiment;
FIG. 5 is a flow chart illustrating the procedure of a failure detection process for a diesel particulate filter according to a second embodiment;
FIG. 6 is a diagram illustrating the stable operating state range according to the above-mentioned embodiment;
FIG. 7 is a flow chart illustrating the steps of the failure detection process for a diesel particulate filter according to a third embodiment;
FIG. 8 is a flow chart illustrating the steps of a test failure detection process according to the above-mentioned embodiment; and
FIG. 9 is a flow chart illustrating the steps of a main failure detection process according to the above-mentioned embodiment.

DETAILED DESCRIPTION OF THE INVENTION

First Embodiment

Hereinafter, a first embodiment of the present invention will be explained with reference to the drawings.

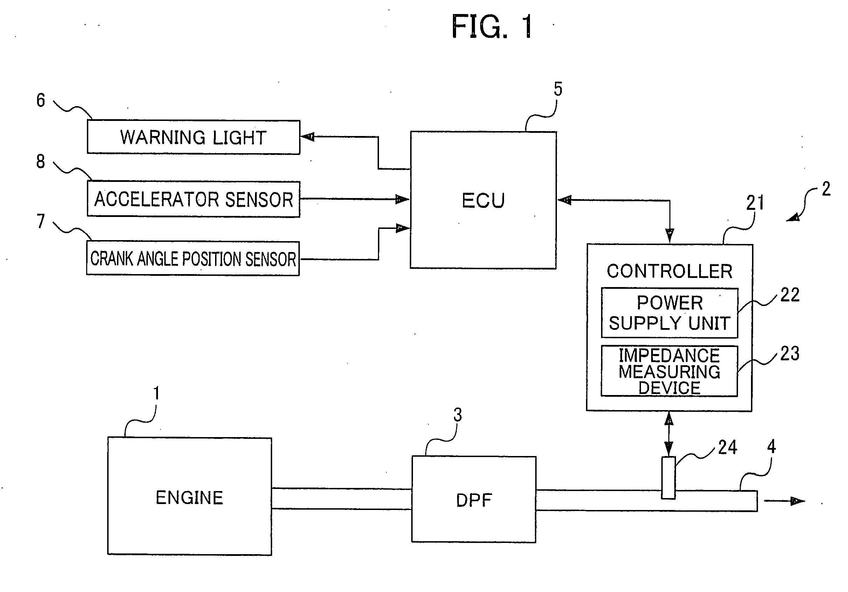

FIG. 1 is a diagram illustrating the structure of an internal combustion engine and a control unit thereof including a failure detection apparatus for an exhaust gas purifying filter according to the present embodiment of the present invention. An internal combustion engine 1(hereinafter simply referred to as "engine") is a diesel engine that directly injects fuel into each cylinder and a fuel injector (not shown) is provided in each cylinder. These fuel injectors are electrically connected with an electronic control unit 5 (hereinafter referred to as "ECU") that controls a valve-opening time and a valve-closing time of the fuel injectors.
An exhaust pipe 4 in which exhaust gas from the engine 1 flows is provided with, in this order from the upstream side, a diesel particulate filter (hereinafter referred to as "DPF") 3 and a particulate matter (hereinafter referred to as "PM") sensor 2 detecting PM, the principal component of which is carbon contained in exhaust gas.
The DPF 3 is provided with filter walls of a porous media and, when exhaust gas passes through fine pores of this filter wall, PM contained in the exhaust gas is collected by being deposited on the surface of the filter wall and in the pores of the filter wall. For example, porous media made of aluminum titanate, cordierite, and the like are used as a constituent material of the filter wall.
The PM sensor 2 is a so-called electrostatic dust collection type of particulate matter sensor provided with a sensor electrode unit 24 provided at the downstream side of the DPF 3 along an exhaust gas pipe 4 and a controller 21 controlling this sensor electrode unit 24.

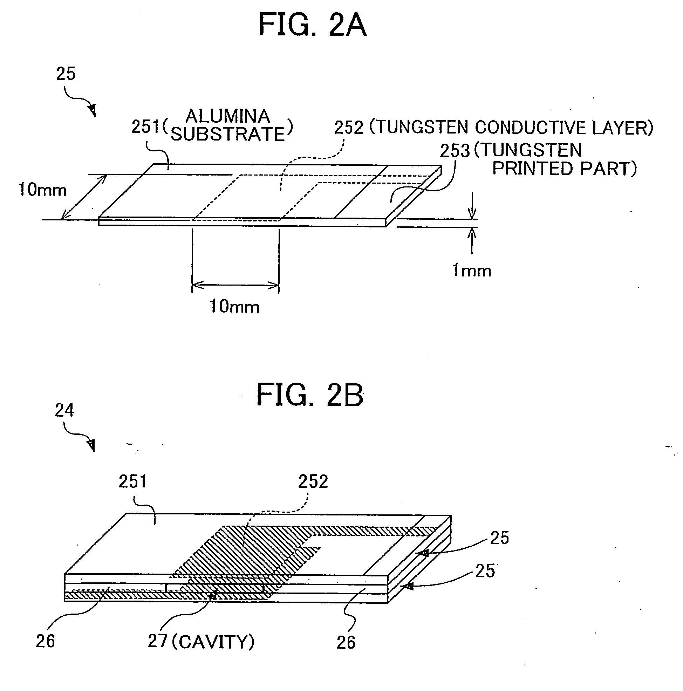

FIGs. 2A and 2B are perspective views illustrating the structure of the sensor electrode unit 24. More specifically, FIG. 2A is a perspective view illustrating the structure of an electrode plate 25 of the sensor electrode unit 24, and FIG. 2B is a perspective view illustrating the structure of the sensor electrode unit 24 configured to including the two electrode plates 25, 25.
As shown in FIG. 2A, the electrode plate 25 is provided with a substantially rectangular alumina substrate 251 and a tungsten conductive layer 252 formed on the surface of this alumina substrate 251. This tungsten conductive layer 252 is configured to including a conductive part formed in a substantially square shape at substantially the center part of the alumina substrate 251, and a conductive wire part extending from this conductive part to a first end side of the alumina substrate 251. In addition, at the first end side of the alumina substrate 251, a tungsten printed part 253 provided by being stacked on the conductive wire part of this tungsten conductive layer 252 is formed.

The thickness of the alumina substrate 251 is about 1 mm, and the length on a side of the conductive part of the tungsten conductive layer 252 is about 10 mm.

As shown in FIG. 2B, the sensor electrode unit 24 is configured by disposing plate-like spacers 26, 26 between a pair of electrode plates 25, 25 to be combined. These spacers 26, 26 are provided at both end sides of each electrode plate 25, and a cavity 27 in which PM is collected is, therefore, formed at the conductive part of the tungsten conductive layer 252 of each electrode plate 25. In addition, the heaters (not shown) are installed in a pair of electrode plates 25, 25 configuring this sensor electrode unit 24, respectively.

Referring to FIG. 1 again, a controller 21 of the PM sensor 2 is configured to including a power supply unit 22 supplying electric power to the sensor electrode unit 24 and impedance measuring equipment 23 detecting an electrical characteristic of the sensor electrode unit 24.

The power supply unit 22 operates based on control signals transmitted from the ECU 5 to apply a predetermined voltage to the sensor electrode unit 24 over a predetermined time. Accordingly, PM contained in the exhaust gas is deposited in a cavity of the sensor electrode unit 24. In addition, by applying a current to the above-mentioned heaters provided in the sensor electrode unit 24, this power supply unit 22 can warm up this sensor electrode unit 24 and can combust deposited PM to regenerate the sensor electrode unit 24.

The impedance measuring equipment 23 operates based on control signals transmitted from the ECU 5 to detect the capacitance of the sensor electrode unit 24 with an alternating current signal applied at a predetermined measured voltage over a predetermined measurement period, and outputs a detection signal substantially proportional to the capacitance value thus detected to the ECU 5.

The ECU 5 is connected to a warning light 6, a crank angle position sensor 7, an accelerator sensor 8, and the like in addition to the above-mentioned PM sensor 2.

For example, the warning light 6 is provided in an instrument panel of a vehicle, and lights up based on a control signal transmitted from the ECU 5. In a case where it is determined that the DPF 3 has failed, the ECU 5 turns on this warning light 6, as described below. Thus, the fact that the DPF 3 has failed can be informed to the driver.

The crank angle position sensor 7 detects the rotation angle of the crankshaft of the engine 1 and outputs a detection signal to the ECU 5. The accelerator sensor 8 detects the amount by which the accelerator pedal of a vehicle has been depressed, and outputs a detection signal to the ECU 5. Revolution speed N and fuel consumption amount W as the operating state parameters indicating the operating state of the engine 1 are calculated by the ECU 5 based on outputs from the crank angle position sensor 7 and the accelerator sensor 8.

The ECU 5 is provided with an input circuit having functions such as shaping signal waveforms that are input from various kinds of sensors, correcting voltage levels to a predetermined level, and converting analog signal values into digital signal values, and a central processing unit (hereinafter referred to as "CPU"). Furthermore, the ECU 5 is provided with a memory circuit that stores various kinds of calculation programs to be executed by the CPU, calculation results, and the like, and an output circuit that outputs control signals to the controller 21 of the PM sensor 2, the warning light 6, the fuel injectors of the engine 1, etc.

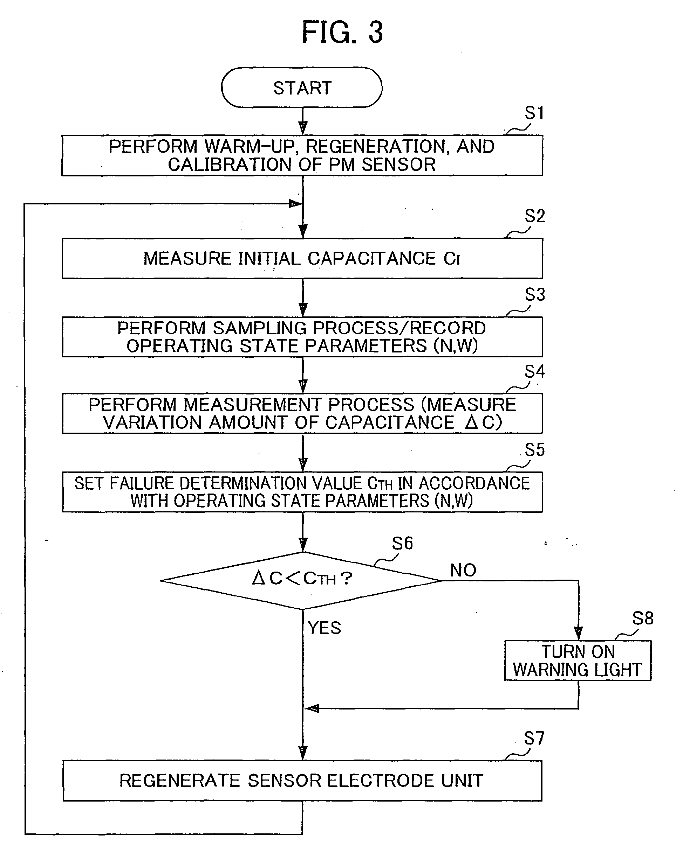

FIG. 3 is a flow chart illustrating the procedure of the DPF failure detection process. This DPF failure detection process is executed by the ECU 5 after the engine starts.

In Step S1, warm-up, regeneration, and calibration of the PM sensor are performed.

In Step S2, the capacitance of the sensor electrode unit is measured, and then recorded as an initial capacitance $C_I$.

In Step S3, while a sampling process is being performed over a predetermined time, the operating state parameters (revolution speed N, fuel consumption amount W) while performing this sampling process are recorded. More specifically, in this sampling process, PM contained in the exhaust gas is caused to deposit in the cavity of the sensor electrode unit by applying a voltage to the sensor electrode unit over a predetermined time.

In Step S4, a measurement process of measuring the variation amount of capacitance $\Delta C$ as the electrical characteristic of the sensor electrode unit is performed. More specifically, in this measurement process, the capacitance of the sensor electrode unit after performing the sampling process is measured and recorded as a post-PM collection capacitance $C_F$. Next, the variation amount $\Delta C(=C_F-C_I)$ of capacitance is calculated by subtracting the above-mentioned initial capacitance $C_I$ from this post-PM collection capacitance $C_F$ and then recorded. In other words, the variation amount of capacitance $\Delta C$ represents the variation amount in capacitance of the sensor electrode unit from before and after performing the sampling process.

In Step S5, a failure determination value $C_{TH}$ is set in accordance with the recorded operating state parameters (revolution speed N, fuel consumption amount W). More specifically, in Step S5, the failure determination value $C_{TH}$ is set based on a control map as shown in the following table, in which the failure determination value $C_{TH}$ is set in relation to each operating state parameter (revolution speed N, fuel consumption amount W).

Table 1

| | | REVOLUTION SPEED N | | |
| | | $N_1$ | $N_2$ | ... |
|---|---|---|---|---|
| FUEL CONSUMPTION AMOUNT W | $W_1$ | $C_{11}$ | $C_{12}$ | ... |
| | $W_2$ | $C_{21}$ | $C_{22}$ | ... |
| | ... | ... | ... | ... |

In Step S6, it is determined whether or not the variation amount of capacitance $\Delta C$ thus measured is smaller than the failure determination value $C_{TH}$. In a case where this determination is "YES", it is determined that the DPF is in a normal state, and the process proceeds to Step S7. In a case where this determination is "NO", it is determined that the DPF is in a failed state, and the process proceeds to Step S8.

Hereinafter, a procedure of making the above-mentioned control map to set the failure determination value $C_{TH}$ will be explained.

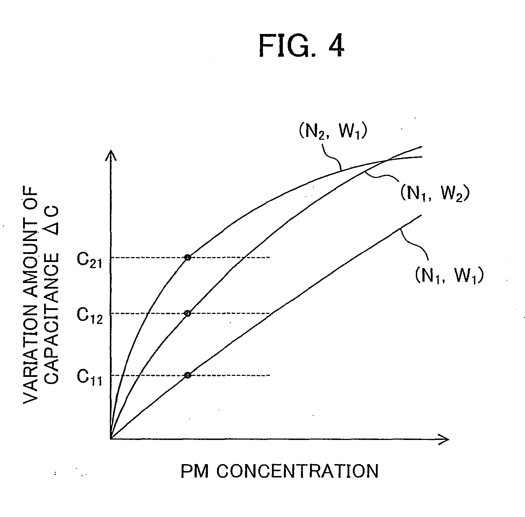

FIG. 4 is a diagram illustrating the relationship between the variation amount of capacitance $\Delta C$ and the PM concentration. More specifically, FIG. 4 is a diagram obtained by running the engine at each of the operating states ($N_1$, $W_1$), ($N_1$, $W_2$), and ($N_2$, $W_1$), while changing the PM concentration downstream of the DPF by intentionally damaging the DPF, and measuring the variation amount of capacitance $\Delta C$ at each of the PM concentrations.

As shown in FIG. 4, since the PM emission amount of the engine changes as the operating state of the engine is changed, the correlation between the PM concentration downstream of the DPF and the variation amount of capacitance $\Delta C$ is also changed. Then, the above-mentioned control map is set by selecting the points at which it is determined that the DPF has failed, from the measurement result in relation to each of the operating states ($N_1$, $W_1$), ($N_1$, $W_2$), and ($N_2$, $W_1$) shown in FIG. 4, and then defining the respective variation amounts of capacitance $\Delta C$ at these points as failure determination values $C_{11}$, $C_{12}$, and $C_{21}$. As described above, a control map is made in order to set a failure determination value $C_{TH}$ in accordance with the recorded operating state parameters (revolution speed N, fuel consumption amount W).

Referring to FIG. 3 again, in Step S7, the sensor electrode unit is regenerated, and then the process returns to Step S2.

In Step S8, the warning light is turned on in response to the determination that the DPF is in a failed state, and then the process proceeds to Step S7.

According to the present embodiment, the following effects can be attained.

(1) The sampling process of causing PM to deposit on the electrode unit 24 by applying a predetermined voltage to the electrode unit 24 is performed, and then the measurement process of measuring the variation amount of capacitance $\Delta C$ of this sensor electrode unit 24 is performed. Furthermore, failure of the DPF 3 is detected based on the variation amount of capacitance $\Delta C$ and the operating state parameters (revolution speed N, fuel consumption amount W) that are measured by this measurement process. In particular, by using the operating state parameters (revolution speed N, fuel consumption amount W) indicating the operating status of the engine 1 while performing the sampling process, failure of the DPF 3 can be detected with high accuracy even if the operating state while performing the sampling process differs from the operating state while performing the measurement process.

(2) A failure determination value $C_{TH}$ is set in accordance with the operating state parameters (revolution speed N, fuel consumption amount W), and then the failure of the DPF 3 is detected by comparing this failure determination value $C_{TH}$ with $\Delta C$. At this point, the failure detection accuracy of the DPF 3 can be further improved by using the control map set based on the preliminarily performed experimentation as described above, when the failure determination value $C_{TH}$ is set from the operating state parameters (revolution speed N, fuel consumption amount W).

(3) The variation amount $\Delta C$ in capacitance from before and after performing the sampling process is measured as a predetermined electrical characteristic of the sensor electrode unit 24 in the measurement process. The capacitance of the sensor electrode unit 24 significantly changes when PM is deposited on the sensor electrode unit 24. According to the present embodiment, by measuring such a variation amount of capacitance $\Delta C$ of the sensor electrode unit 24, the concentration of PM contained in the exhaust gas downstream of the DPF 3 can be accurately detected. Therefore, the failure detection accuracy of the DPF 3 can be further improved.

In the present embodiment, the ECU 5 configures the failure detection means; the ECU 5, the crank angle position sensor 7, and the accelerator sensor 8 configure the operating state detection means; and the ECU 5 and the controller 21 of the PM sensor 2 configure the particulate matter detection means. More specifically, the means involved in performing Steps S5 and S6 in FIG. 3 configure the failure detection means, and the means involved in performing Steps S3 and S4 in FIG. 3 configure the particulate matter detection means.

Second Embodiment

Hereinafter, a second embodiment of the present invention will be explained with reference to the drawings.

In the below explanation of the second embodiment, the reference numerals in the first embodiment are assigned to the same elements as those in the first embodiment, and the explanation of these elements are omitted or simplified.

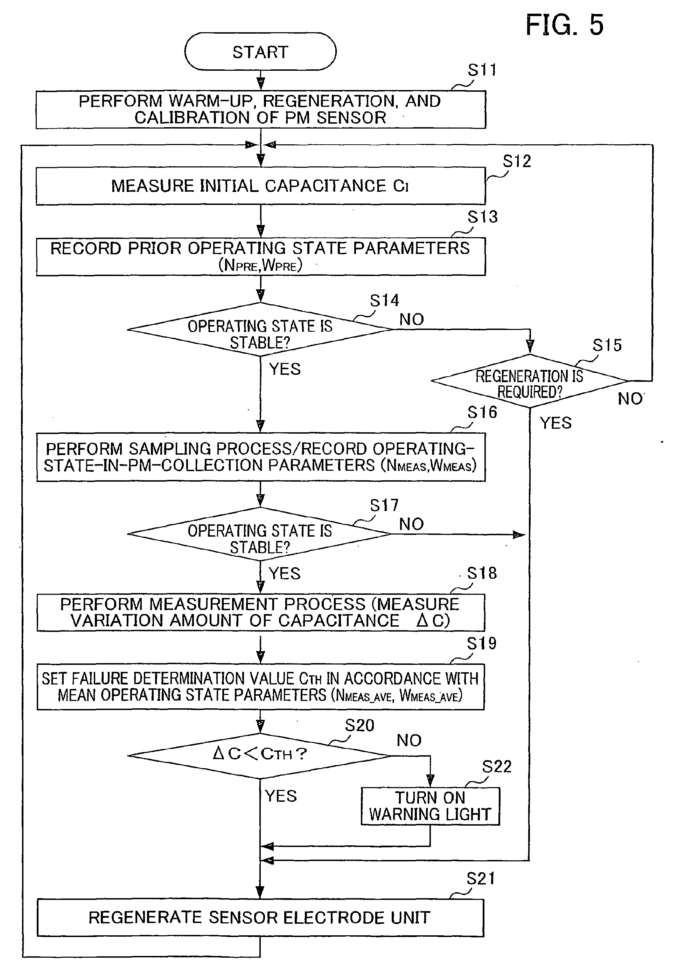

FIG. 5 is a flow chart illustrating the procedure of the DPF failure detection process by the ECU according to the present embodiment. As shown in FIG. 5, the present embodiment differs from the first embodiment in the point that it is determined whether or not the operating state of the engine is stable in Step S14, and the sampling process is performed in Step S16 only in a case where the operating state is thus determined to be stable. In addition, the present embodiment differs from the first embodiment in the point that it is determined whether or not the operating state of the engine is stable in Step S17, and the measurement process is performed in Step S18 only in a case where the operating state is thus determined to be stable.

In Step S11, warm-up, regeneration, and calibration of the PM sensor are performed.

In Step S12, the capacitance of the sensor electrode unit is measured, and then recorded as an initial capacitance $C_I$.

In Step S13, the operating state parameters (revolution speed N, fuel consumption amount W) are measured over a predetermined prior monitor time $T_{PRE}$, and recorded as prior operating state parameters (revolution speed $N_{PRE}[T], ... , N_{PRE}[T+T_{PRE}]$, fuel consumption amount $W_{PRE}[T], ... , W_{PRE}[T+T_{PRE}]$).

In Step S14, it is determined whether or not the operating state is stable. In a case where this determination is "YES", the process proceeds to Step S16, and in a case where this determination is "NO", the process proceeds to Step S15. More specifically, in Step S14, it is determined whether or not the prior operating state parameters (revolution speed $N_{PRE}[T], ... , N_{PRE}[T+T_{PRE}]$, fuel consumption amount $W_{PRE}[T], ... , W_{PRE}[T+T_{PRE}]$) satisfy the conditional expressions (1) and (2), and the conditional expressions (3) and (4).

$$N_{MIN} < N_{PRE}[T], ... , N_{PRE}[T+T_{PRE}] < N_{MAX} \quad (1)$$

$$W_{MIN} < W_{PRE}[T], ... , W_{PRE}[T+T_{PRE}] < W_{MAX} \quad (2)$$

$$N_{PRE\_MAX} - N_{PRE\_MIN} < N_{LIM} \quad (3)$$

$$W_{PRE\_MAX} - W_{PRE\_MIN} < W_{LIM} \quad (4)$$

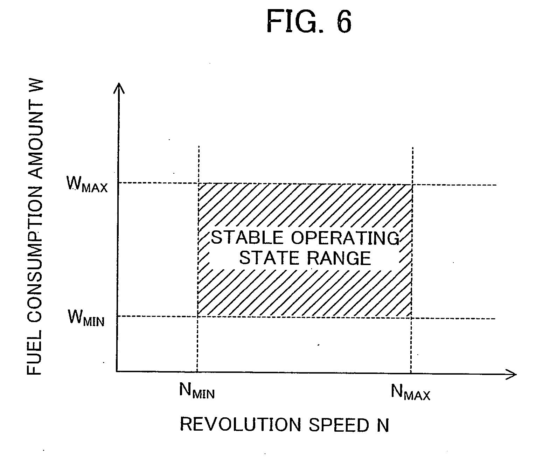

The conditional expressions (1) and (2) are used for determining whether or not the prior operating state parameters (revolution speed $N_{PRE}[T], ... , N_{PRE}[T+T_{PRE}]$, fuel consumption amount $W_{PRE}[T], ... , W_{PRE}[T+T_{PRE}]$) are within a stable operating state range ($[N_{MIN},N_{MAX}], [W_{MIN},W_{MAX}]$) that is set from the lower limit value $N_{MIN}$ to the upper limit value $N_{MAX}$ of the revolution speed and from the lower limit value $W_{MIN}$ to the upper limit value $W_{MAX}$ of the fuel consumption amount ($[N_{MIN},N_{MAX}], [W_{MIN},W_{MAX}]$), as shown in FIG. 6.

The conditional expressions (3) and (4) are used for determining whether or not the fluctuation range ($N_{PRE\_MAX}-N_{PRE\_MIN}-W_{PRE\_MIN}-W_{PRE\_MIN}$) of the prior operating state parameters (revolution speed $N_{PRE}[T], ... , N_{PRE}[T+T_{PRE}]$, fuel consumption amount $W_{PRE}[T], ... , W_{PRE}[T+T_{PRE}]$) are within a predetermined revolution speed range $N_{LIM}$ and a predetermined fuel consumption range $W_{LIM}$. The fluctuation range $N_{PRE\_MAX}-N_{PRE\_MIN}$ of the revolution speed is the difference between the maximum value and the minimum value of the revolution speed $N_{PRE}[T], ... , N_{PRE}[T+T_{PRE}]$, and the fluctuation range $W_{PRE\_MAX}-W_{PRE\_MIN}$ of the fuel consumption amount is the difference between the maximum value and the minimum value of the fuel consumption amount $W_{PRE}[T], ... , W_{PRE}[T+T_{PRE}]$.

Referring to FIG. 5 again, in Step S15, the state of the sensor electrode unit is confirmed, and then it is determined whether or not regeneration of the sensor electrode unit is required. In a case where this determination is "YES", the process returns to Step S21, and in a case where this determination is "NO", the process proceeds to Step S12.

More specifically, in Step S15, it is determined that regeneration of the sensor electrode unit is required in a case where a predetermined time $T_{MAX}$ or more has passed since the initial capacitance $C_I$ was measured, and then the process proceeds to Step S21 to regenerate the sensor electrode unit.

Alternatively, the capacitance of the sensor electrode unit is measured, and then the variation amount of capacitance is calculated by subtracting the initial capacitance $C_I$ from the measured capacitance. Also in a case where this variation amount of capacitance is more than a predetermined determination value $\Delta C_{ERR}$, it is determined that regeneration of the sensor electrode unit is required, and then the process proceeds to Step S21 to regenerate the sensor electrode unit.

In Step S16, the sampling process is performed over a predetermined time $T_{MEAS}$. At the same time, the operating state parameters while performing this sampling process are recorded as operating-state-in-PM-collection parameters (revolution speed $N_{MEAS}[T], ... , N_{MEAS}[T+T_{MEAS}]$, fuel consumption amount $W_{MEAS}[T], ... , W_{MEAS}[T+T_{MEAS}]$).

In Step S17, it is determined whether or not the sampling process was performed while the operating state of the engine was stable. In a case where this determination is "YES", the process proceeds to Step S18, and in a case where this determination is "NO", the process proceeds to Step S21. More specifically, in Step S17, it is determined whether or not the operating-state-in-PM-collection parameters (revolution speed $N_{MEAS}[T], ... , N_{MEAS}[T+T_{MEAS}]$, fuel consumption amount $W_{MEAS}[T], ... , W_{MEAS}[T+T_{MEAS}]$) satisfy the conditional expressions (5) and (6), and the conditional expressions (7) and (8).

$$N_{MIN} < N_{MEAS}[T], ... , N_{MEAS}[T+T_{MEAS}] < N_{MAX} \quad (5)$$

$$W_{MIN} < W_{MEAS}[T], ... , W_{MEAS}[T+T_{MEAS}] < W_{MAX} \quad (6)$$

$$N_{MEAS\_MAX} - N_{MEAS\_MIN} < N_{LIM} \quad (7)$$

$$W_{MEAS\_MAX} - W_{MEAS\_MIN} < W_{LIM} \quad (8)$$

Similarly to the conditional expressions (1) and (2), the conditional expressions (5) and (6) are used for determining whether or not the operating-state-in-PM-collection parameters (revolution speed $N_{MEAS}[T], ... , N_{MEAS}[T+T_{MEAS}]$, fuel consumption amount $W_{MEAS}[T], ... , W_{MEAS}[T+T_{MEAS}]$ are within a stable operating state range ($[N_{MIN}, N_{MAX}]$, $[W_{MIN}, W_{MAX}]$) that is set from the lower limit value $N_{MIN}$ to the upper limit value $N_{MAX}$ of the revolution speed and from the lower limit value $W_{MIN}$ to the upper limit value $W_{MAX}$ of the fuel consumption amount ($[N_{MIN}, N_{MAX}]$, $[W_{MIN}, W_{MAX}]$).

The conditional expressions (7) and (8) are used for determining whether or not the fluctuation range ($N_{MEAS\_MAX} - N_{MEAS\_NIN}$, $W_{MEAS\_MAX} - W_{MEAS\_MIN}$) of the operating-state-in-PM-collection parameters (revolution speed $N_{MEAS}[T], ... , N_{MEAS}[T+T_{MEAS}]$, fuel consumption amount $W_{MEAS}[T], ... , W_{MEAS}[T+T_{MEAS}]$) are within a predetermined revolution speed range $N_{LIM}$ and a predetermined fuel consumption range $W_{LIM}$. The fluctuation range $N_{MEAS\_MAX} - N_{MEAS\_MIN}$ of the revolution speed is the difference between the maximum value and the minimum value of the revolution speed $N_{MEAS}[T], ... , N_{MEAS}[T+T_{MEAS}]$, and the fluctuation range $W_{MEAS\_MAX} - M_{MEAS\_MIM}$ of the fuel consumption amount is the difference between the maximum value and the minimum value of the fuel consumption amount $W_{MEAS}[T], ... , W_{MEAS}[T+T_{MEAS}]$.

In Step S18, a measurement process of measuring the variation amount of capacitance $\Delta C$ as an electrical characteristic of the sensor electrode unit is performed. More specifically, in this measurement process, the capacitance of the sensor electrode unit after performing the sampling process is measured and recorded as a post-PM collection capacitance $C_F$. Next, the variation amount $\Delta C (=C_F - C_I)$ of capacitance is calculated by subtracting the above-mentioned initial capacitance $C_I$ from this post-PM collection capacitance $C_F$, and then recorded.

In Step S19, mean values of the operating-state-in-PM-collection parameters (revolution speed $N_{MEAS}[T], ... , N_{MEAS}[T+T_{MEAS}]$, fuel consumption amount $W_{MEAS}[T], ... , W_{MEAS}[T+T_{MEAS}]$) over the time $T_{MEAS}$ are calculated, these are defined as mean operating state parameters ($N_{MEAS\_AVE}, M_{MEAS\_AVE}$) and then the failure determination value $C_{TH}$ in relation to the variation amount of capacitance $\Delta C$ is set in accordance with these mean operating state parameters ($N_{MEAS\_AVE}, W_{MEAS\_AVE}$).

At this point, the failure determination value $C_{TH}$ is set in accordance with the mean operating state parameters ($N_{MEAS\_AVE}, W_{MEAS\_AVE}$), by using the control map predefined in a similar way to the first embodiment.

In Step S20, it is determined whether or not the variation amount of capacitance $\Delta C$ thus measured is smaller than the failure determination value $C_{TH}$. In a case where this determination is "YES", it is determined that the DPF is in a normal state, and then the process proceeds to Step S21. In a case where this determination is "NO", it is determined that the DPF is in a failed state, and then the process proceeds to Step S22.

In Step S21, the sensor electrode unit is regenerated, and then the process returns to Step S12.

In Step S22, the warning light is turned on in response to the determination that the DPF is in a failed state, and then the process proceeds to Step S21.

According to the present embodiment, the following effects can be attained in addition to the above-mentioned effects (1) to (3).

(4) When the failure determination value $C_{TH}$ is set, the mean operating state parameters ($N_{MEAS\_AVE}$, $W_{MEAS\_AVE}$) that are used are mean values of the operating state parameters (N, W) while performing the sampling process. Thus, while performing the sampling process, or while causing PM to deposit on the sensor electrode unit 24, the operating state of the engine 1 can be more accurately reflected in the mean operating state parameters ($N_{MEAS\_AVE}$, $W_{MEAS\_AVE}$). Therefore, by detecting the failure of the DPF 3 with such the mean operating state parameters ($N_{MEAS\_AVE}$, $W_{MEAS\_AVE}$), the detection accuracy of the DPF 3 failure can be further improved.

(5) The sampling process is performed only in a case where the operating state parameters (N, W) are within the stable operating state range ($[N_{MIN},N_{MAX}]$, $[W_{MIN}, W_{MAX}]$) over the prior monitor time $T_{PRE}$, or only in a case where the operating state of the engine 1 is stable, before the sampling process is performed. For example, in a case where the operating state of the engine 1 substantially changes while performing the sampling process, or while causing PM to deposit on the sensor electrode unit 24, the concentration of PM in exhaust gas cannot be accurately reflected in the variation amount of capacitance $\Delta C$ measured in the measurement process. According to the present embodiment, by performing the sampling process only in a case where the operating state is stable as described above, the failure detection accuracy of the DPF 3 can be further improved.

(6) The measurement process is performed only in a case where the operating state parameters (N, W) are within the stable operating state ranges ($[N_{MIN},N_{MAX}]$, $[W_{MIN},W_{MAX}]$) over the prior monitor time $T_{MEAS}$ while performing the sampling process, or only in a case where the sampling process has been performed in a state in which the operating state of the engine 1 was stable. Therefore, the failure detection accuracy of the DPF 3 can be further improved.

In the present embodiment, the means involved in performing Steps S19 and S20 in FIG. 5 configure the failure detection means, the means involved in performing Steps S16 and S18 in FIG. 5 configure the particulate matter detection means, the means involved in performing Step S14 in FIG. 5 configure the perform sampling determination means, and the means involved in performing Step S17 in FIG. 5 configure the perform measurement determination means.

Third Embodiment

Hereinafter, a third embodiment of the present invention will be explained with reference to the drawings.

In the below explanation of the third embodiment, the reference numerals in the second embodiment are assigned to the same elements as those in the second embodiment, and the explanation of these elements are omitted or simplified.

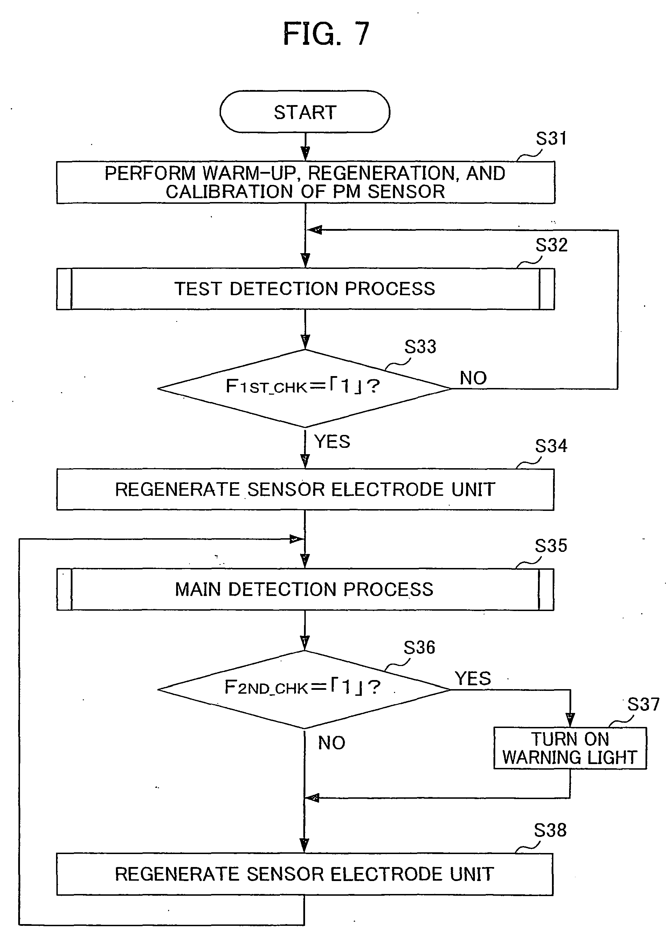

FIG. 7 is a flow chart illustrating the procedure of the DPF failure detection process according to the present embodiment. As shown in FIG. 7, the present embodiment differs from the second embodiment in the point that the test detection process is performed in Step S32, and the main detection process is performed in Step S35 only in a case where performing the main detection process is determined to be required.

In Step S31, warm-up, regeneration, and calibration of the PM sensor are performed.

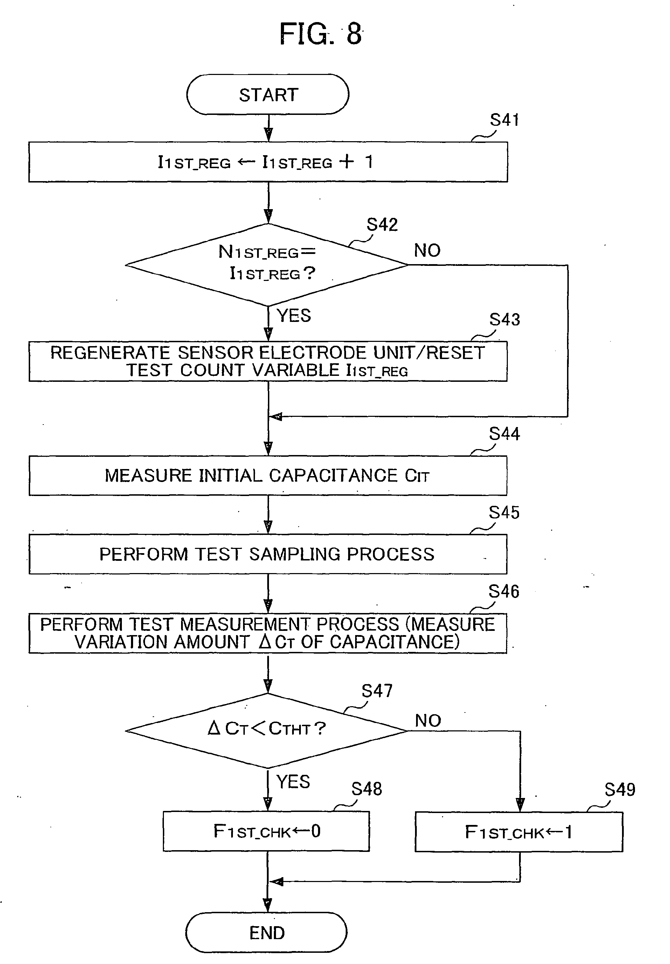

In Step S32, the test detection process described in detail below with reference to FIG. 8 is performed.

In Step S33, it is determined whether or not a first determination flag $F_{1ST\_CHK}$ is "1." In a case where this determination is "YES", the process proceeds to Step S34, and in a case where this determination is "NO", the process proceeds to Step S32. The first determination flag $F_{1ST\_CHK}$ is a flag indicating that performing the main detection process is required, and is set to "1" in Step S49 of the test detection process described below with reference to FIG. 8. Here, this first determination flag $F_{1ST\_CHK}$ is set to "0" immediately after performing this DPF failure detection process.

In Step S34, the sensor electrode unit is regenerated.

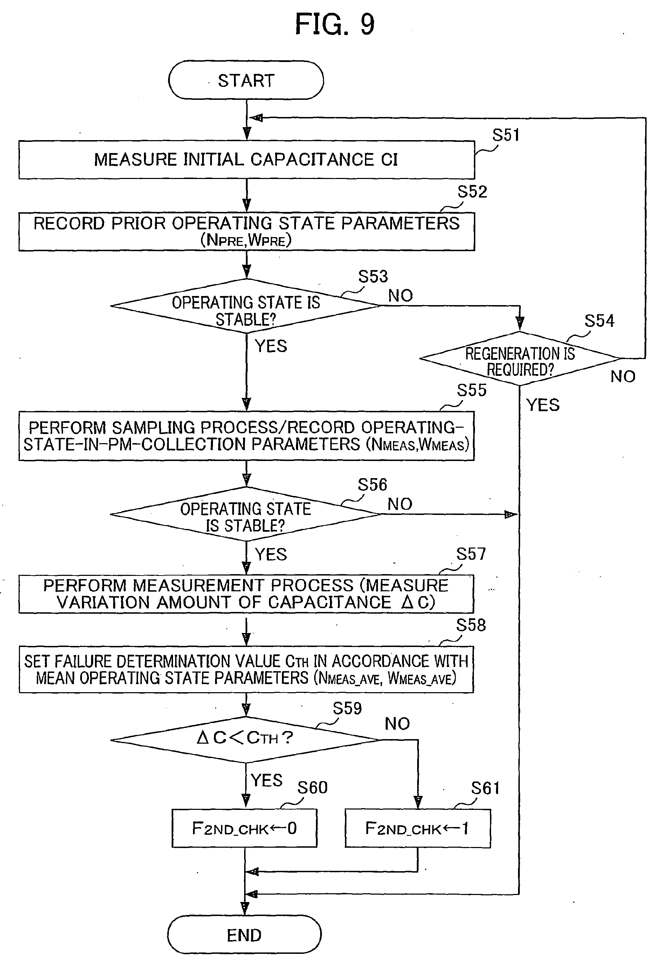

In Step S35, the main detection process described in detail below with reference to FIG. 9 is performed.

In Step S36, it is determined whether or not a second determination flag $F_{2ND\_CHK}$ is "1." In a case where this determination is "YES", the process proceeds to Step S37, and in a case where this determination is "NO", the process proceeds to Step S38. The second determination flag $F_{2ND\_CHK}$ is a flag indicating that the DPF is in a failed state, and is set to "1" in Step S61 of the main detection process illustrated in FIG. 9 described later. This second determination flag $F_{2ND\_CHK}$ is set to "0" immediately after performing this DPF failure detection process.

In Step S37, the warning light is turned on in response to the determination that the DPF is in a failed state, and then the process proceeds to Step S38. In Step S38, the sensor electrode unit is regenerated, and then the process returns to Step S35.

FIG. 8 is a flow chart illustrating the procedure of the test detection process.

In Step S41, a test count variable $I_{1ST\_REG}$ is incremented by "1." This test count variable $I_{1ST\_REG}$ represents the number of times that the test detection process is performed consecutively without regenerating the sensor electrode unit.

In Step S42, it is determined whether or not a predetermined upper limit value of the consecutive times $N_{1ST\_REG}$ is equal to the test count variable $I_{1ST\_REG}$. In a case where this determination is "YES", the process proceeds to Step S43, and in a case where this determination is "NO", the process proceeds to Step S44.

In Step S43, a test count variable $I_{1ST\_REG}$ is reset to "0" after regenerating the sensor electrode unit.

In Step S44, the capacitance of the sensor electrode unit is measured, and then recorded as an initial capacitance $C_{IT}$.

In Step S45, the test sampling process is performed over a predetermined time. More specifically, in this test sampling process, PM contained in the exhaust gas is caused to deposit in the cavity of the sensor electrode unit by applying a voltage to the sensor electrode unit over a predetermined time.

In Step S46, a test measurement process of measuring the variation amount $\Delta C_T$ of capacitance as an electrical characteristic of the sensor electrode unit is performed. More specifically, in this test measurement process, the capacitance of the sensor electrode unit after performing the test sampling process is measured and recorded as a post-PM collection capacitance $C_{FT}$. Next, the variation amount $\Delta C_T (=C_{FT}-C_{IT})$ of capacitance is calculated by subtracting the above-mentioned initial capacitance $C_{IT}$ from this post-PM collection capacitance $C_{FT}$, and then recorded. In other words, the variation amount $\Delta C_T$ of capacitance represents the variation amount in capacitance of the sensor electrode unit from before and after performing the test sampling process.

In Step S47, it is determined whether or not the measured variation amount $\Delta C_T$ of capacitance is smaller than a predetermined execution determination value $C_{THT}$. The execution determination value $C_{THT}$ is a threshold value that is set to determine whether or not to perform the main detection process, and is set to an extremely small value.

In a case where this determination is "YES", it is determined that the DPF is reliably in a normal state, and that performing the main detection process is not required, and then the process proceeds to Step S48. In Step S48, the first determination flag $F_{1ST\_CHK}$ is set to "0" to prevent the main detection process from being performed.

In a case where this determination is "NO", it is determined that the DPF may be in a failed state, and thus it is determined that performing the main detection process is required, and then the process proceeds to Step S49. In Step S49, the first determination flag $F_{1ST\_CHK}$ is set to "1" to allow the main detection process to be performed.

FIG. 9 is a flow chart illustrating the procedure of the main failure detection process.

As shown in the FIG. 9, Steps S51 to S58 are the same as Steps S12 to S19 of the flow chart shown in FIG. 5, and a detailed explanation is, therefore, omitted.

In Step S59, it is determined whether or not the variation amount of capacitance $\Delta C$ thus measured is smaller than the failure determination value $C_{TH}$. In a case where this determination is "YES", it is determined that the DPF is in a normal state, and then the process proceeds to Step S60 in which the second determination flag $F_{2ND\_CHK}$ is set to "0." In a case where this determination is "NO", it is determined that the DPF is in a failed state, and then the process proceeds to Step S61 in which set the second determination flag $F_{2ND\_CHK}$ is set to "1."

According to the present embodiment, the following effects can be attained in addition to the above-mentioned effects (1) to (6).

(7) In the present embodiment, the sampling process and the measurement process are performed only in a case where the operating state of the engine 1 is stable. Therefore, in a case where the operating state substantially changes while performing the sampling process, for example, it is necessary to temporarily interrupt the sampling process so as not to be performed consecutively, remove PM deposited on the sensor electrode unit 24, this electrode unit is regenerated, and then repeat performing the sampling process once more after regenerating this sensor electrode unit 24. Such regeneration of the sensor electrode unit 24 is conducted, for example, by heating the sensor electrode unit 24 with heaters over a predetermined time to combust PM. That is, in a case where the operating state of the engine 1 is unstable, the electrode unit 24 is regenerated more frequently, which causes the detection for failure of the DPF 3 to be performed less frequently.

Thus, according to the present embodiment, by taking advantage of the fact that, when the DPF 3 is normal, the amount of PM deposited on the sensor electrode unit 24 extremely decreases regardless of the operating state of the engine 1, the test sampling process and the test measurement process are performed provisionally, and then it is determined whether or not to perform the sampling process and the measurement process that are for detecting the failure based on these results. Thus, in a state in which the DPF 3 is normal, the sampling process and the measurement process can be performed less frequently, and the sensor electrode unit 24 can be regenerated less frequently. As a result, it is possible to improve the frequency at which detection for failure of the DPF 3 is performed.

(8) The variation amount $\Delta C_T$ of capacitance measured by performing the test measurement process is compared with the execution determination value $C_{THT}$ and, in a case where the variation amount $\Delta C_T$ of capacitance is smaller than the execution determination value $C_{THT}$, the sampling process and the measurement process are prevented from being performed. Thus, setting the execution determination value $C_{THT}$ to an extremely small value can prevent the sampling process and the measurement process for detecting the failure of the DPF 3 from being performed, even though the DPF 3 is normal. As a result, it is possible to improve the frequency at which detection for failure of the DPF 3 is performed.

In the present embodiment, the means involved in performing Steps S58 and S59 in FIG. 9 configure the failure detection means, the means involved in performing Steps S55 and S57 in FIG. 9 configure the particulate matter detection means, the means involved in performing Step S53 in FIG. 9 configure the perform sampling determination means, the means involved in performing Step S56 in FIG. 9 configure the perform measurement determination means, the means involved in performing Steps S45 and S46 in FIG. 8 configure the test particulate matter detection means, the means involved in performing Step S47 in FIG. 8 configure the determination means, and the means involved in performing Step S48 in FIG. 8 configure the prevention means.

While preferred embodiments of the present invention have been described and illustrated above, it is to be understood that they are exemplary of the invention and are not to be considered to be limiting. Additions, omissions, substitutions, and other modifications can be made thereto without departing from the scope of the present invention. Accordingly, the invention is not to be considered to be limited by the foregoing description and is only limited by the scope of the appended claims.

For example, in the above-mentioned embodiment, the revolution speed N and the fuel consumption amount W are used as the operating state parameters indicating the operating state of the engine; however, the type or the number of operating state parameters is not limited thereto. Any operating state parameters may be used to obtain the emission amount of PM exhausted from the engine, such as the amount of intake air.

A failure detection apparatus for an exhaust gas purifying filter is provided that uses an electrostatic dust collection type of particulate matter sensor, while being capable of high-accuracy detection of failure. The failure detection apparatus for a DPF performs a sampling process (S3) that causes PM to deposit on a sensor electrode unit by applying a predetermined voltage to the sensor electrode unit, and then performs the measurement process (S4) to measure the variation amount of capacitance $\Delta C$ of the sensor electrode unit. In addition, the failure detection apparatus for a DPF records operating state parameters (revolution speed N, fuel consumption amount W) in the performance of this sampling process, and then detects DPF failure based on these operating state parameters (revolution speed N, fuel consumption amount W) and the variation amount of capacitance $\Delta C$.

**Claims**

1.  A failure detection apparatus for an exhaust gas purifying filter (3) that is provided in an exhaust gas path (4) of an internal combustion engine (1), and that collects particulate matter contained in exhaust gas emitted from the internal combustion engine (1), the apparatus comprising:

    an operating state detection means (5, 7, 8) for detecting an operating state (N, W) including engine revolution speed (N) and fuel consumption amount (W) of the internal combustion engine (1);
    an electrode unit (24) that is provided downstream of the exhaust gas purifying filter (3) in the exhaust gas path (4);
    a particulate matter detection means (5, 21) for performing a sampling process (S3, S13, S55) of causing particulate matter to deposit on the electrode unit (24) by applying a predetermined voltage to the electrode unit (24), and then performing a measurement process (S4, S18, S57) of measuring a variation amount of capacitance ($\Delta C$) of the electrode unit (24); and
    a failure detection means (S6, S20, S59) for detecting failure of the exhaust gas purifying filter (3) based on an operating state parameter (N, W) indicating the operating state of the internal combustion engine while performing the sampling process (S3, S13, S55) and the variation amount of capacitance ($\Delta C$) measured by performing the measurement process (S4, S20, S59);
    wherein the failure detection means (S6, S20, S59) sets a first threshold value ($C_{TH}$, $C_{11}$, $C_{12}$, $C_{21}$) in accordance with the operating state parameter, and then compares the first threshold value with the measured value measured by performing the measurement process (S4, S18, S57) to detect failure of the exhaust gas purifying filter (3), **characterized in that** the failure detection apparatus further comprising:

    a test particulate matter detection means (5, 21) for performing a test sampling process (S45) of causing particulate matter to deposit on the electrode unit (24) by applying a predetermined voltage to the electrode unit, and then performing a test measurement process (S46) of measuring variation amount of capacitance ($\Delta CT$) of the electrode unit;
    a determination means (5) for determining whether or not to perform the sampling process and the measurement process, by comparing a predetermined second threshold value ($C_{THT}$) with the variation amount of capacitance ($\Delta C_T$) measured by performing the test measurement process (S46); and

a prevention means (5) for preventing the sampling process and the measurement process from being performed, in a case where the determination means determines that the sampling process and the measurement process are not to be performed.

2. The failure detection apparatus according to claim 1, wherein the electrical characteristic is a variation amount in capacitance ($\Delta C$) from before and after performing the sampling process (S3, S13, S55).

3. The failure detection apparatus according to claim 1 or 2, wherein the operating state parameter is a mean value ($N_{MEAS\_AVE}$, $W_{MEAS\_AVE}$) of a detection value detected by the operating state detection means while performing the sampling process (S3, S13, S55).

4. The failure detection apparatus according to any one of claims 1 to 3, further comprising a perform sampling determination means (5) for determining whether or not the detection value detected by the operating state detection means before performing the sampling process (S3, S13, S55) is within a predetermined first determination range ($[N_{MIN}, N_{MAX}]$, $[W_{MIN}, W_{MAX}]$) that is set from a lower limit value ($N_{MIN}$) to an upper limit value ($N_{MAX}$) of the revolution speed (N) and from a lower ($W_{MIN}$) to an upper limit value ($W_{MAX}$) of the fuel consumption amount (W) over a predetermined first determination time ($T_{PRE}$), wherein
the sampling process is performed only in a case where the detection value is determined to be within the first determination range over the first determination time.

5. The failure detection apparatus according to any one of claims 1 to 4, further comprising a perform measurement determination means (5) for determining whether or not the detection value detected by the operating state detection means while performing the sampling process is within a predetermined second determination range ($[N_{MIN}, N_{MAX}]$, $[W_{MIN}, W_{MAX}]$) that is set from a lower limit value ($N_{MIN}$) to an upper limit value ($N_{MAX}$) of the revolution speed (N) and from a lower ($W_{MIN}$) to an upper limit value ($W_{MAX}$) of the fuel consumption amount (W) over a predetermined second determination time ($T_{MEAS}$), wherein
the measurement process is performed only in a case where the detection value is determined to be within the second determination range over the second determination time.

6. The failure detection apparatus according to claim 1, wherein the determination means (5) compares the second threshold value ($C_{THT}$) with the variation amount of capacitance ($\Delta C_T$) measured by performing the test measurement process, and determines that the sampling process and the measurement process are not to be performed in a case where the measured value is smaller than the second threshold value.

**Patentansprüche**

1. Fehlererfassungsvorrichtung für einen Abgasreinigungsfilter (3), der in einem Abgasweg (4) eines Verbrennungsmotors (1) vorgesehen ist und der Partikelmaterial sammelt, das im von dem Verbrennungsmotor (1) abgegebenen Abgas enthalten ist, wobei die Vorrichtung umfasst:

ein Betriebszustanderfassungsmittel (5, 7, 8) zum Erfassen eines Betriebszustands (N, W), einschließlich einer Motordrehzahl (N) und einer Kraftstoffverbrauchsmenge (W) des Verbrennungsmotors (1);
eine Elektrodeneinheit (24), die stromab des Abgasreinigungsfilters (3) in dem Abgasweg (4) vorgesehen ist;
ein Partikelmaterialerfassungsmittel (5, 21) zum Durchführen eines Sammelprozesses (S3, S13, S55) zum Bewirken, dass sich Partikelmateriel auf der Elektrodeneinheit (24) ablagert, indem eine vorbestimmte Spannung an die Elektrodeneinheit (24) angelegt wird, und dann Durchführen eines Messprozesses (S4, S18, S57) zum Messen eines Veränderungsbetrags der Kapazität ($\Delta C$) der Elektrodeneinheit (24); und
ein Fehlererfassungsmittel (S6, S20, S59) zum Erfassen eines Fehlers des Abgasreinigungsfilters (3) basierend auf einem Betriebszustandparameter (N, W), der den Betriebszustand des Verbrennungsmotors (1) angibt, während der Sammelprozess (S3, S13, S55) durchgeführt wird, und dem Veränderungsbetrag der Kapazität ($\Delta C$), der durch Ausführen des Messprozesses (S4, S20, S59) gemessen wird;
worin das Fehlererfassungsmittel (S6, S20, S59) einen ersten Schwellenwert ($C_{TH}$, $C_{11}$, $C_{12}$, $C_{21}$) gemäß dem Betriebszustandparameter setzt und dann den ersten Schwellenwert mit dem Messwert vergleicht, der durch Ausführen des Messprozesses (S4, S18, S57) gemessen wird, um einen Fehler des Abgasreinigungsfilters (3) zu erfassen,
**dadurch gekennzeichnet, dass** die Fehlererfassungsvorrichtung ferner umfasst:

ein Testpartikelmaterialerfassungsmittel (5, 21) zum Durchführen eines Testsammelprozesses (S45) zum Bewirken, dass sich Partikelmaterial auf der Elektrodeneinheit (24) ablagert, indem eine vorbestimmte Spannung an die Elektrodeneinheit angelegt wird, und dann Durchführen eines Testmessprozesses (S46) zum Messen eines Veränderungsbetrags der Kapazität ($\Delta C_T$) der Elektrodeneinheit;

ein Bestimmungsmittel (5) zum Bestimmen, ob der Sammelprozess und der Messprozess ausgeführt werden sollen oder nicht, durch Vergleichen eines vorbestimmten zweiten Schwellenwerts ($C_{THT}$) mit dem Veränderungsbetrag der Kapazität ($\Delta C_T$), der durch Ausführen des Testmessprozesses (S46) gemessen wird; und

ein Verhinderungsmittel (5) zum Verhindern der Ausführung des Sammelprozesses und des Messprozesses in einem Fall, wo das Bestimmungsmittel bestimmt, dass das Sammelprozess und der Messprozess nicht ausgeführt werden sollen.

2. Die Fehlererfassungsvorrichtung nach Anspruch 1, worin die elektrische Charakteristik ein Veränderungsbetrag der Kapazität ($\Delta C$) von vor und nach der Durchführung des Sammelprozesses (S3, S13, S55) ist.

3. Die Fehlererfassungsvorrichtung nach Anspruch 1 oder 2, worin der Betriebszustandparameter ein Mittelwert ($N_{MEAS\_AVE}$, $W_{MEAS\_AVE}$) eines Erfassungswerts ist, der vom Betriebszustanderfassungsmittel erfasst wird, während der Sammelprozess (S3, S13, S55) durchgeführt wird.

4. Die Fehlererfassungsvorrichtung nach einem der Ansprüche 1 bis 3, die ferner ein Sammeldurchführungsbestimmungsmittel (5) aufweist, um zu bestimmen, ob der vom Betriebszustandparameter vor der Durchführung des Sammelprozesses (S3, S13, S55) erfasste Erfassungswert innerhalb eines vorbestimmten ersten Bestimmungsbereichs ([$N_{MIN}$, $N_{MAX}$], [$W_{MIN}$, $W_{MAX}$]) ist oder nicht, der von einem unteren Grenzwert ($N_{MIN}$) bis zu einem oberen Grenzwert ($N_{MAX}$) der Drehzahl (N) und von einem unteren ($W_{MIN}$) zu einem oberen Grenzwert ($W_{MAX}$) der Kraftstoffverbrauchsmenge (W) über eine vorbestimmte erste Bestimmungszeit ($T_{PRE}$) hinweg gesetzt ist, worin der Sammelprozess nur in einem Fall durchgeführt wird, wo bestimmt wird, dass der Erfassungswert über die erste Bestimmungszeit hinweg innerhalb des ersten Bestimmungsbereichs liegt.

5. Die Fehlererfassungsvorrichtung nach einem der Ansprüche 1 bis 4, die ferner ein Messdurchführungserfassungsmittel (5) aufweist, zum Bestimmen, ob der vom Betriebszustanderfassungsmittel während der Ausführung des Sammelprozesses erfasste Erfassungswert innerhalb eines zweiten Bestimmungsbereichs ([$N_{MIN}$, $N_{MAX}$], [$W_{MIN}$, $W_{MAX}$]) liegt oder nicht, der von einem unteren Grenzwert ($N_{MIN}$) zu einem oberen Grenzwert ($N_{MAX}$) der Drehzahl (N) und von einem unteren ($W_{MIN}$) zu einem oberen Grenzwert ($W_{MAX}$) der Kraftstoffverbrauchsmenge (W) über eine vorbestimmte zweite Bestimmungszeit ($T_{MEAS}$) hinweg gesetzt ist, worin der Messprozess nur in einem Fall durchgeführt wird, wo bestimmt wird, dass der Erfassungswert über die zweite Bestimmungszeit hinweg innerhalb des zweiten Bestimmungsbereichs liegt.

6. Die Fehlererfassungsvorrichtung nach Anspruch 1, worin das Bestimmungsmittel (5) den zweiten Schwellenwert ($C_{THT}$) mit dem Veränderungsbetrag der Kapazität ($\Delta C_T$), der durch Ausführung des Testmessprozesses gemessen wird, vergleicht und in einem Fall, wo der gemessene Wert kleiner als der zweite Schwellenwert ist, bestimmt, dass der Sammelprozess und der Messprozess nicht durchgeführt werden sollen.

**Revendications**

1. Appareil de détection de défaillance pour filtre de purification de gaz d'échappement (3) qui est prévu dans un circuit de gaz d'échappement (4) d'un moteur à combustion interne (1) et qui collecte des particules de matière contenues dans le gaz d'échappement émis par le moteur à combustion interne (1), l'appareil comprenant:

un moyen de détection d'un état de fonctionnement (5, 7, 8) pour détecter un état de fonctionnement (N, W) incluant le régime du moteur (N) et la consommation de carburant (W) du moteur à combustion interne (1);

une électrode (24) qui est prévue en aval du filtre de purification du gaz d'échappement (3) dans le circuit de gaz d'échappement (4);

un moyen de détection de particules de matière (5, 21) pour effectuer un processus d'échantillonnage (S3, S13, S55) provoquant le dépôt de particules de matière sur l'électrode (24) par l'application d'une tension prédéterminée sur l'électrode (24) et effectuant ensuite un processus de mesure (S4, S18, S57) d'une variation de capacitance (AC) de l'électrode (24); et

un moyen de détection de défaut (S6, S20, S59) pour détecter un défaut du filtre de purification du gaz d'échappement (3) sur base d'un paramètre d'état de fonctionnement (N, W) indiquant l'état de fonctionnement du moteur à combustion interne tout en effectuant le processus d'échantillonnage (S3, S13, S55) et la mesure de variation de capacitance ($\Delta C$) mesurée par le processus de mesure (S4, S20, S59);

dans lequel le moyen de détection de défaut (S6, S20, S59) définit une première valeur limite ($C_{TH}$, $C_{11}$, $C_{12}$, $C_{21}$) en conformité avec le paramètre d'état de fonctionnement et compare ensuite la première valeur limite à la valeur mesurée en effectuant le processus de mesure (S4, S18, S57) afin de détecter un défaut du filtre de purification du gaz d'échappement (3),

**caractérisé en ce que** l'appareil de détection de défaut comprend en outre:

un moyen d'essai de détection de particules de matière (5, 21) pour effectuer un essai de processus d'échantillonnage (S45) provoquant le dépôt de particules de matière sur l'électrode (24) par l'application d'une tension prédéterminée sur l'électrode et effectuant ensuite un essai de processus de mesure (S46) d'une variation de capacitance ($\Delta C_T$) de l'électrode;

un moyen de détermination (5) pour décider d'effectuer ou non le processus d'échantillonnage et le processus de mesure, par comparaison d'une deuxième valeur limite prédéterminée ($C_{LIMT}$) avec la variation de capacitance ($\Delta C_T$) mesurée en effectuant l'essai de processus de mesure (S46); et

un moyen de prévention (5) pour empêcher l'exécution du processus d'échantillonnage et du processus de mesure au cas où le moyen de détermination détermine que le processus d'échantillonnage et le processus de mesure ne doivent pas être exécutés.

2. Appareil de détection de défaut suivant la revendication 1, dans lequel la caractéristique électrique est une variation de capacitance ($\Delta C$) avant et après l'exécution du processus d'échantillonnage (S3, S13, S55).

3. Appareil de détection de défaut suivant la revendication 1 ou 2, dans lequel le paramètre d'état de fonctionnement est une valeur moyenne ($N_{MOY\_MES}$, $W_{MOY\_MES}$) d'une valeur de détection détectée par le moyen de détection d'un état de fonctionnement pendant l'exécution du processus d'échantillonnage (S3, S13, S55).

4. Appareil de détection de défaut suivant l'une des revendications 1 à 3, comprenant en outre un moyen de détermination d'un échantillonnage (5) pour déterminer si la valeur de détection détectée par le moyen de détection d'un état de fonctionnement avant d'effectuer le processus d'échantillonnage (S3, S13, S55) est dans une première plage de détermination prédéterminée ([$N_{MIN}$, $N_{MAX}$], [$W_{MIN}$, $W_{MAX}$]) qui est définie entre une valeur limite inférieure ($N_{MIN}$) et une valeur limite supérieure ($N_{MAX}$) de la vitesse de révolution (N) et entre une valeur limite inférieure ($W_{MIN}$) et une valeur limite supérieure ($W_{MAX}$) de la consommation de carburant (W) pendant un premier temps de détermination prédéterminé ($T_{PRE}$), dans lequel le processus d'échantillonnage est effectué uniquement dans le cas où la valeur de détection est déterminée comme étant dans la première plage de détermination pendant le premier temps de détermination.

5. Appareil de détection de défaut suivant l'une des revendications 1 à 4, comprenant en outre un moyen de détermination d'une mesure (5) pour déterminer si la valeur de détection détectée par le moyen de détection d'un état de fonctionnement pendant l'exécution du processus d'échantillonnage est dans une deuxième plage de détermination prédéterminée ([$N_{MIN}$, $N_{MAX}$], [$W_{MIN}$, $W_{MAX}$]) qui est définie entre une valeur limite inférieure ($N_{MIN}$) et une valeur limite supérieure ($N_{MAX}$) de la vitesse de révolution (N) et entre une valeur limite inférieure ($W_{MIN}$) et une valeur limite supérieure ($W_{MAX}$) de la consommation de carburant (W) pendant un deuxième temps de détermination prédéterminé ($T_{MOYD}$), dans lequel le processus de mesure est effectué uniquement dans le cas où la valeur de détection est déterminée comme étant dans la deuxième plage de détermination pendant le deuxième temps de détermination.

6. Appareil de détection de défaut suivant la revendication 1, dans lequel le moyen de détermination (5) compare la deuxième valeur limite ($C_{LIMT}$) avec la variation de capacitance ($\Delta C_T$) mesurée pendant l'exécution l'essai de processus de mesure et détermine que le processus d'échantillonnage et le processus de mesure ne doivent pas être exécutés dans un cas où la valeur mesurée est inférieure à la deuxième valeur limite.

# FIG. 1

# FIG. 2A

25

251 ( ALUMINA SUBSTRATE )    252 (TUNGSTEN CONDUCTIVE LAYER)

253 (TUNGSTEN PRINTED PART)

10mm

10mm

1mm

# FIG. 2B

24

251    252

25

25

26    27 (CAVITY)    26

# FIG. 3

START

S1
PERFORM WARM-UP, REGENERATION, AND
CALIBRATION OF PM SENSOR

S2
MEASURE INITIAL CAPACITANCE $C_I$

S3
PERFORM SAMPLING PROCESS/RECORD
OPERATING STATE PARAMETERS (N,W)

S4
PERFORM MEASUREMENT PROCESS (MEASURE
VARIATION AMOUNT OF CAPACITANCE $\Delta C$)

S5
SET FAILURE DETERMINATION VALUE $C_{TH}$ IN ACCORDANCE
WITH OPERATING STATE PARAMETERS (N,W)

S6
$\Delta C < C_{TH}$?

NO

YES

S8
TURN ON
WARNING LIGHT

S7
REGENERATE SENSOR ELECTRODE UNIT

# FIG. 4

FIG. 5

```
                    ┌──────────────────┐
                    │      START       │
                    └──────────────────┘
                             │
                             ▼                              S11
    ┌──────────────────────────────────────────────────┐
    │  PERFORM WARM-UP, REGENERATION, AND               │
    │  CALIBRATION OF PM SENSOR                         │
    └──────────────────────────────────────────────────┘
                             │
                             ▼                              S12
    ┌──────────────────────────────────────────────────┐
    │         MEASURE INITIAL CAPACITANCE Ci            │
    └──────────────────────────────────────────────────┘
                             │
                             ▼                              S13
    ┌──────────────────────────────────────────────────┐
    │  RECORD PRIOR OPERATING STATE PARAMETERS          │
    │  (NPRE, WPRE)                                      │
    └──────────────────────────────────────────────────┘
                             │
                             ▼                S14
                      ◇───────────────◇         NO
                      ◇ OPERATING STATE IS ◇──────────────┐
                      ◇    STABLE?      ◇                  │
                      ◇───────────────◇                   ▼            S15
                             │ YES               ◇──────────────◇
                             │                   ◇ REGENERATION IS ◇──── NO
                             │                   ◇  REQUIRED?     ◇
                             ▼                S16 ◇──────────────◇
    ┌──────────────────────────────────────────┐   │ YES
    │  PERFORM SAMPLING PROCESS/RECORD OPERATING-│
    │  STATE-IN-PM-COLLECTION PARAMETERS         │
    │  (NMEAS, WMEAS)                            │
    └──────────────────────────────────────────┘
                             │
                             ▼                S17
                      ◇───────────────◇         NO
                      ◇ OPERATING STATE IS ◇──────────────►
                      ◇    STABLE?      ◇
                      ◇───────────────◇
                             │ YES                          S18
    ┌──────────────────────────────────────────────────┐
    │  PERFORM MEASUREMENT PROCESS (MEASURE             │
    │  VARIATION AMOUNT OF CAPACITANCE ΔC)              │
    └──────────────────────────────────────────────────┘
                             │                              S19
    ┌──────────────────────────────────────────────────┐
    │  SET FAILURE DETERMINATION VALUE CTH IN ACCORDANCE WITH │
    │  MEAN OPERATING STATE PARAMETERS (NMEAS_AVE, WMEAS_AVE) │
    └──────────────────────────────────────────────────┘
                             │
                             ▼              S20
                      ◇───────────────◇       NO
                      ◇    ΔC < CTH ?   ◇──────────────┐
                      ◇───────────────◇               ▼       S22
                             │ YES            ┌──────────────────┐
                             │                │   TURN ON        │
                             │                │ WARNING LIGHT    │
                             │                └──────────────────┘
                             ▼                              S21
    ┌──────────────────────────────────────────────────┐
    │       REGENERATE SENSOR ELECTRODE UNIT            │
    └──────────────────────────────────────────────────┘
```

# FIG. 6

FUEL CONSUMPTION AMOUNT W

$W_{MAX}$

STABLE OPERATING STATE RANGE

$W_{MIN}$

$N_{MIN}$  $N_{MAX}$

REVOLUTION SPEED N

# FIG. 7

START

S31
PERFORM WARM-UP, REGENERATION, AND
CALIBRATION OF PM SENSOR

S32
TEST DETECTION PROCESS

S33
$F_{1ST\_CHK} = \ulcorner 1 \lrcorner$ ?    NO

YES

S34
REGENERATE SENSOR ELECTRODE UNIT

S35
MAIN DETECTION PROCESS

S36
$F_{2ND\_CHK} = \ulcorner 1 \lrcorner$ ?    YES

S37
TURN ON
WARNING LIGHT

NO

S38
REGENERATE SENSOR ELECTRODE UNIT

# FIG. 8

```
           START
             |
             v
  I1ST_REG ← I1ST_REG + 1          S41
             |
             v
      N1ST_REG =        S42   NO
      I1ST_REG ?  ─────────────┐
             | YES             |
             v          S43     |
  REGENERATE SENSOR ELECTRODE    |
  UNIT/RESET TEST COUNT          |
  VARIABLE I1ST_REG              |
             |                   |
             |<──────────────────┘
             v          S44
  MEASURE INITIAL CAPACITANCE CIT
             |
             v          S45
  PERFORM TEST SAMPLING PROCESS
             |
             v          S46
  PERFORM TEST MEASUREMENT PROCESS
  (MEASURE VARIATION AMOUNT ΔCT
  OF CAPACITANCE)
             |
             v
       ΔCT < CTHT ?    S47   NO
      ─────────────────────────┐
             | YES             |
             v  S48            v  S49
     F1ST_CHK ← 0      F1ST_CHK ← 1
             |                 |
             |<────────────────┘
             v
           END
```

# FIG. 9

START

MEASURE INITIAL CAPACITANCE CI — S51

RECORD PRIOR OPERATING STATE PARAMETERS ($N_{PRE}$, $W_{PRE}$) — S52

OPERATING STATE IS STABLE? — S53 — NO

YES

REGENERATION IS REQUIRED? — S54 — NO

YES

PERFORM SAMPLING PROCESS/RECORD OPERATING-STATE-IN-PM-COLLECTION PARAMETERS ($N_{MEAS}$, $W_{MEAS}$) — S55

OPERATING STATE IS STABLE? — S56 — NO

YES

PERFORM MEASUREMENT PROCESS (MEASURE VARIATION AMOUNT OF CAPACITANCE $\Delta C$) — S57

SET FAILURE DETERMINATION VALUE $C_{TH}$ IN ACCORDANCE WITH MEAN OPERATING STATE PARAMETERS ($N_{MEAS\_AVE}$, $W_{MEAS\_AVE}$) — S58

$\Delta C < C_{TH}$? — S59 — NO

YES — S60

$F_{2ND\_CHK} \leftarrow 0$

$F_{2ND\_CHK} \leftarrow 1$ — S61

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008115765 A
- JP 2007315275 A
- JP 2007132290 A
- JP 2008139294 A
- DE 102006029990 A1
- DE 102006057528 A1